# EUROPEAN PATENT APPLICATION

(11) **EP 1 394 105 A1**
(43) Date of publication of application: **03.03.2004**
(21) Application number: 03254861.2
(22) Date of filing: 05.08.2003
(51) Int. Cl.: C01B 3/50, C01B 3/52, H01M 8/06

(54) **Hydrogen supply system and mobile hydrogen production system**

(30) Priority: 13.08.2002 JP 2002235498
(71) Applicant: Mitsubishi Heavy Industries, Ltd., Tokyo 108-8215 (JP)
(72) Inventor: Shimizu, Taku, c/o Mitsubishi Heavy Ind., Ltd., Tokyo 108-8215 (JP); IIjima, Masaki, c/o Mitsubishi Heavy Ind., Ltd., Tokyo 108-8215 (JP); Hirano, Masahiro, c/o Mitsubishi Heavy Ind., Ltd., Tokyo 108-8215 (JP); Kobayashi, Kazuto, c/o Mitsubishi Heavy Ind., Ltd., Hiroshima, Hiroshima-ken (JP); Oguchi, Akira, c/o Mitsubishi Heavy Ind., Ltd., Tokyo 108-8215 (JP); Kuroda, Kennosuke, c/o Ryowa Engineering Co., Ltd., Yokohama, Kanagawa-ken (JP)
(74) Representative: Tanner, James Percival

(57) **Abstract**

A hydrogen supply system is configured so that a hydrogen supply station and a mobile hydrogen production system 1 are included, and hydrogen produced by the mobile hydrogen production system is supplied to the hydrogen supply station.

## Description

### BACKGROUND OF THE INVENTION

### 1. Field of the Invention

The present invention relates to a hydrogen supply system and a mobile hydrogen production system which are used for fuel cell powered automobiles and distributed fuel cell equipment. 2. Background Description

Fuel cell powered automobiles and distributed fuel cell equipment are now being developed actively. For example, hydrogen-mounted fuel cell powered automobiles use a principle that the mounted hydrogen is supplied to a fuel cell to obtain electricity, and a motor is rotated by the obtained electricity. Such a principle can be applied to all vehicles including not only automobiles running on four wheels but also motorcycles, trains running on rails, and the like. By the use of a system in which a fuel cell is used to operate a driving unit, high energy efficiency can be provided, and the emission of CO₂ can be reduced and the emission of NOx can be almost eliminated, the emission of CO₂ and NOx posing a global environment problem.

As a fuel cell powered automobile system, unreformed material can be supplied to the fuel cell powered automobile itself, and the material can be reformed into hydrogen on the vehicle and the hydrogen can be used in a fuel cell. However, the practical use of this system is thought to require many years because the system has many problems to be solved, such as long time required for starting, accommodation to many start/stop times, and freezing in cold districts. Therefore, it is thought that a fuel cell powered automobile of a high-pressure hydrogen mounted type will be used widely for the time being. A big problem in widely using such fuel cell powered automobiles of a high-pressure hydrogen mounted type is to develop an infrastructure for hydrogen supply. In other words, there arises a problem of how a wide-area infrastructure for hydrogen supply is developed for fuel cell powered automobiles that run freely. As an infrastructure for hydrogen supply that is generally being developed at present, any of the following three methods can be used:
(1) Hydrogen is produced in large quantities at a factory etc., and it is transported to hydrogen supply stations in a form of liquefied hydrogen or high-pressure hydrogen by using a tank lorry or the like.
(2) Hydrogen is produced in large quantities at a factory etc., and it is transported to hydrogen supply stations with a pipeline.
(3) Hydrogen is produced by water-vapor reforming city gas or a liquid material (desulfurized naphtha, gasoline, kerosene, light oil, methanol, etc.) by using a reformer at a hydrogen station.

The method of item (1) has disadvantages in terms of transportation efficiency of tank lorry, limit of transportation distance, loss resulting from vaporization during transportation, transportation cost, and the like. The method of item (2) requires a large-scale provision such as new laying of pipeline and construction of compression equipment for fed gas, so that regions to which this method may be applied is limited. The method of item (3) is superior in that the existing infrastructure such as a city gas pipe network and gasoline stations can be utilized to the utmost, but has disadvantages that the reformer is expensive and requires a considerably large installation space because of its large size, and that it requires high technology in maintenance and operation because they are complicated, which makes it difficult to secure personnel for maintenance and operation.

From the above-described situation, the development of infrastructure for hydrogen supply, which is a prior condition for wide use of fuel cell powered automobiles, presents many problems, so that it is thought that the wide use will take much time.

### SUMMARY OF THE INVENTION

In view of the above-described situation, the present invention proposes a hydrogen supply system which can supply hydrogen to fuel cell powered automobiles and distributed fuel cell equipment by utilizing the existing infrastructure to the utmost by recognizing the superiority of the method in which hydrogen is produced by water-vapor reforming city gas or liquid material (desulfurized naphtha, gasoline, kerosene, light oil, methanol, etc.) by using a reformer at a hydrogen station, and also by overcoming the problems of expensive reformer, large installation space, difficulty in securing personnel for maintenance and operation, and the like, which are disadvantages of this method.

To achieve the above object, the hydrogen supply system in accordance with the present invention comprises a hydrogen supply station and a mobile hydrogen production system and supplies hydrogen produced by the mobile hydrogen production system to the hydrogen supply station. The mobile hydrogen production system includes such systems in which a hydrogen unit is provided on a movable body or systems in which a hydrogen production unit is trailed by a movable body and the like. The hydrogen supply station may be for a fuel cell powered automobile or may be for distributed fuel cell equipment.

The hydrogen production unit must be of a small size in order that the mobile hydrogen production system has a size suitable for moving on a public road. As a reformer to be used in the above-described mobile hydrogen production system, a hydrogen separation type reformer such as a membrane reformer or a reformer of a type such that a hydrogen separation membrane is incorporated in the refined gas separation process is preferably used. The reformer of this type has a compact size and high efficiency because hydrogen can selectively be taken out directly without a hydrogen refiner such as a CO converter, pressure swing adsorption (PSA), and hydrogen absorbing alloy, so that it is suitable for a mobile system.

In order to produce hydrogen by utilizing the existing infrastructure to the utmost, it is more effective that many kinds of material can be used. Therefore, the mobile hydrogen production system is preferably configured so as to be capable of producing hydrogen by being supplied with two or more kinds of fuel material. That is to say, the mobile hydrogen production system is preferably a multi-fuel type system. As fuels that may be used as a material for hydrogen, hydrocarbon-base compounds, such as city gas, LPG, kerosene, gasoline, and light oil, and hydrocarbon-base compounds in a broad sense that include oxygen, such as methanol, ethanol, and dimethyl ether (DME), can be cited. Which fuel material should be used depends on the economic, regional, and social conditions. For example, when the mobile hydrogen production system moves in a plurality of regions, the mobile hydrogen production system must sometimes produce hydrogen by being supplied with material different depending on each region. Therefore, it is preferable that the mobile hydrogen production system can produce hydrogen by being supplied with two or more kinds of material.

Specifically, it is preferable that a desulfurizer for removing an odorant contained in city gas be provided in front of the membrane reformer, or a prereformer for once converting hydrocarbon in the fuel into hydrocarbon gas consisting mainly of methane be provided. Also, when methanol etc. are used, an evaporator for evaporating them is preferably provided. As the kind of equipment to be added increases, the function as a multi-fuel type is extended. By providing some of the equipment, the mobile hydrogen production system can accommodate two or more kinds of fuels.

The mobile hydrogen production system is preferably provided with a material tank. In using the mobile hydrogen production system, amodel is assumed in which hydrogen is produced while material is being supplied at the hydrogen supply station, and is supplied to the hydrogen supply station. However, by providing the material tank in the mobile hydrogen production system, hydrogen can be produced in advance during running where the distance to the hydrogen supply station is long, so that the production time can be shortened substantially. The hydrogen produced during running is stored in storage means (unit). As the storage means, a hydrogen tank and a hydrogen storage device using a hydrogen absorbing alloy can be cited. Also, in order to store hydrogen in the hydrogen tank, a compressor unit for compressing hydrogen is provided.

In this case, the mobile hydrogen production system is preferably configured so that it is provided with a driving mechanism using a fuel cell and produces hydrogen by being supplied with material from the material tank even during running to utilize the produced hydrogen for the running of the mobile hydrogen production system itself.

For the hydrogen supply system in accordance with the present invention, in one embodiment thereof, the hydrogen supply station is provided at two or more places, and the mobile hydrogen production system goes round or moves to the hydrogen supply stations.

The mobile hydrogen production system is preferably provided with a CO₂ recovery unit. The reason for this is that CO₂ is preferably recovered and reused to reduce the emission thereof from an environmental viewpoint. In this case, it is preferable that CO₂ be recovered by being absorbed by an absorbent in the mobile hydrogen production system, and the used absorbent be regenerated and also CO₂ be recovered at an absorbent regeneration base.

The recovered CO₂ is reused industrially or is fixed, which can contribute to countermeasures against global warming, and also is sometimes used for dealing in emissions rights. In another aspect, the present invention relates to a mobile hydrogen production system, and the mobile hydrogen production system is characterized by being loaded with a hydrogen production unit including a membrane reformer, a hydrogen compressor, a hydrogen tank, a boiler, a CO₂ solvent tank, and a material tank. In the preferred embodiment of the hydrogen supply system in accordance with the present invention, such a mobile hydrogen production system is used.

### BRIEF DESCRIPTION OF THE DRAWINGS

The foregoing and other objects, aspects and advantages will be better understood from the following detailed description of preferred embodiments of the invention with reference to the drawings, in which:
FIG. 1 is a block diagram showing one embodiment of a hydrogen supply system in accordance with the present invention;
FIG. 2 is a schematic view showing one embodiment of a hydrogen supply station and a hydrogen production vehicle used in the present invention;
FIG. 3 is a partially broken perspective view showing one embodiment of a membrane reformer capable of being used in the present invention;
FIG. 4 is a block diagram for illustrating a scheme of one embodiment of a mobile hydrogen production system capable of being used in the present invention;
FIG. 5 is a block diagram for illustrating a scheme of another embodiment of a mobile hydrogen production system capable of being used in the present invention.

### DETAILED DESCRIPTION OF A PREFERRED EMBODIMENT OF THE INVENTION

A hydrogen supply system in accordance with the present invention will now be described with reference to embodiments shown in the accompanying drawings.

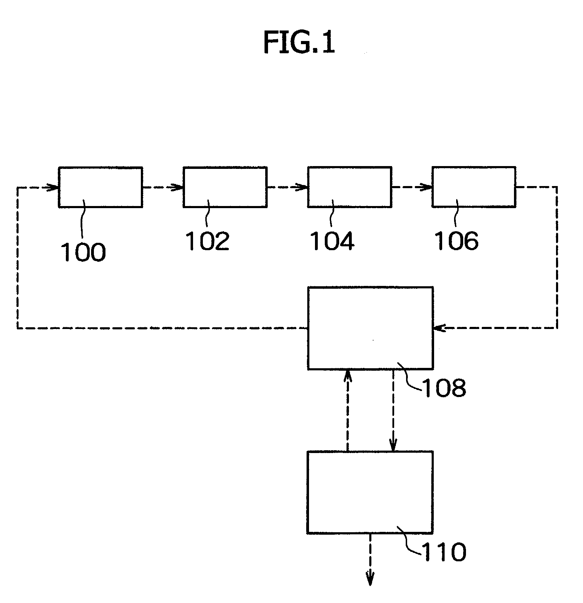

Figure 1 schematically shows the outline of one embodiment of a hydrogen supply system in accordance with the present invention.

This hydrogen supply system includes a plurality of hydrogen supply stations 100, 102, 104 and 106. A hydrogen production vehicle (not shown) goes round along the path indicated by the dotted line.

In Figure 1, four hydrogen stations 100 to 106 are shown. However, these are shown for convenience of explanation, and more hydrogen supply stations than shown can be included. Also, the number of hydrogen supply stations may be smaller than that shown in the figure. The embodiment shown in Figure 1 is based on a concept that the hydrogen production vehicle goes round periodically. However, the configuration may be such that a mobile hydrogen production vehicle goes to the station on random request. That is to say, the configuration can be such that the mobile hydrogen production vehicle goes to stations distributed over a wide area once an order is received.

The hydrogen supply stations 100 to 106 may utilize existing gasoline stations. It is possible to produce hydrogen and store it in a hydrogen tank while kerosene or gasoline is supplied to the mobile hydrogen production vehicle from an existing gasoline station.

The hydrogen supply stations 100 to 106 may be such that various kinds of different material are supplied to the mobile hydrogen production vehicle. As fuels that may be used as a material, in addition to city gas and kerosene, hydrocarbon-base compounds, such as gasoline and light oil, and hydrocarbon-base compounds in a broad sense that include oxygen, such as methanol, ethanol, and dimethyl ether (DME), can be cited. By making the hydrogen production vehicle, described later, a mobile hydrogen production system provided with a multi-fuel type reformer, the hydrogen production vehicle can use different fuels as material.

Also, the embodiment shown in Figure 1 includes a CO₂ solvent (absorbent) recovery station 108 and a CO₂ solvent refinery 110. The CO₂ solvent refinery 110 is a CO₂ solvent regeneration base.

Next, the operation of the hydrogen supply system constructed as described above in accordance with the embodiment shown in Figure 1 will be described.

The hydrogen production vehicle goes round the hydrogen supply stations 100 to 106. The hydrogen production vehicle stops at each of the hydrogen supply stations 100 to 106, and produces hydrogen while being supplied with material. The produced hydrogen is stored in a hydrogen tank provided at each of the hydrogen supply stations 100 to 106.

The hydrogen production vehicle absorbs CO₂ generated during hydrogen production by using a CO₂ solvent, which is an absorbent such as an amine. The CO₂ solvent is recovered by the CO₂ solvent recovery station 108, and is sent to the CO₂ solvent refinery 110. The CO₂ solvent is regenerated at the CO₂ solvent refinery 110, and is returned to the CO₂ solvent recovery station 108. The returned CO₂ solvent is reused by the hydrogen production vehicle. The CO₂ obtained from the CO₂ solvent has high purity, so that it may be sold as a product.

The CO₂ solvent recovery station 108 and the CO₂ solvent refinery 110 may be located adjacently or may be an integrated plant.

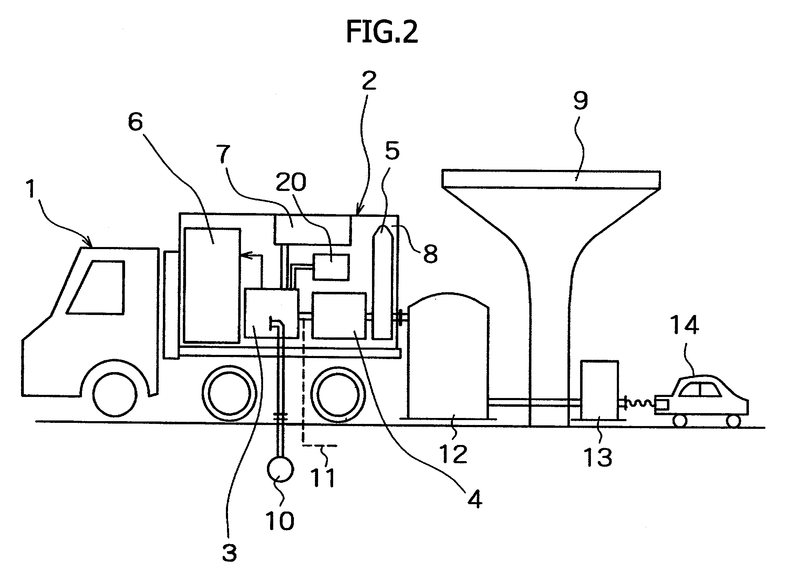

Figure 2 shows an embodiment of a hydrogen production vehicle capable of using the embodiment shown in Figure 1. The hydrogen production vehicle is one embodiment of a mobile hydrogen production system. Figure 2 shows a state in which the hydrogen production vehicle supplies hydrogen at the hydrogen supply station.

This hydrogen production vehicle 1 is provided with a hydrogen production unit 2 in a rear cargo bed portion. The hydrogen production unit 2 is constructed so that a membrane reformer (hydrogen separation type reformer) 3, a boiler 20, a hydrogen compressor 4, a hydrogen tank 5, a CO₂ solvent tank 6, and a material tank 7 are contained in a container 8.

By using the membrane reformer as a reformer, the hydrogen production unit 2 can be made compact and thus be loaded easily on a vehicle etc.

For the membrane reformer that enables a compact hydrogen production unit capable of being loaded easily on a vehicle etc., various types have been proposed by the applicant of the present invention (for example, Japanese Patent Provisional Publication No. 9-2805 (No. 2805/1997)).

The hydrogen production vehicle 1 can further be supplied with city gas 10, and electricity/water 11 at a hydrogen supply station 9.

The hydrogen production vehicle 1 constructed as described above produces hydrogen by using the membrane reformer 3 while being supplied with the city gas 10 and electricity/water 11. The boiler 20 is used to supply water vapor that is used when the city gas 10 is subjected to water vapor reforming (including preliminary reforming). The produced hydrogen is compressed by the hydrogen compressor unit 4 and is stored in the hydrogen tank 5, or is stored in a hydrogen tank 12 at the hydrogen supply station 9. CO₂ generated during hydrogen production is absorbed by an absorbent such as an amine (CO₂ solvent) in the CO₂ solvent tank 6.

The hydrogen supply station 9 supplies hydrogen to a fuel cell powered automobile 14 by using a high-pressure dispenser 13.

In this embodiment, the hydrogen production vehicle 1 is supplied with city gas. However, city gas contains an odorant. Therefore, such odorant is removed at a stage prior to the membrane reformer 3 by using a desulfurizer, not shown.

Also, the hydrogen production vehicle 1 is constructed so as to be capable of accommodating the supplied material; for example, it is provided with a prereformer to once convert hydrocarbon in the material into hydrocarbon gas consisting mainly of methane.

The hydrogen production vehicle 1 is provided with the material tank 7, so that when the distance to a hydrogen supply station 9 is long, hydrogen can be produced in advance while the vehicle 1 is running, by which the production time can be shortened substantially. Also, by providing the hydrogen production vehicle 1 with a driving system using a fuel cell, the obtained hydrogen can be used as running energy for the vehicle 1. In this case, the hydrogen production vehicle 1 is also provided with a tank for storing water necessary for the water vapor reforming reaction. The hydrogen produced during running is stored in the hydrogen tank 5, which is storage means. As the storage means, a hydrogen storing device using a hydrogen absorbing alloy can be used in place of the hydrogen tank 5.

Considering that hydrogen is stored in the hydrogen tank 5 in this manner, the hydrogen production vehicle 1 is provided with a suspension for restraining vibrations of the hydrogen production unit 2 as far as possible.

Although not shown explicitly in Figure 2, the hydrogen supply station 9 is provided with a hydrogen leakage sensor or the like so as to provide a countermeasure mechanism for securing safety in case of hydrogen leakage.

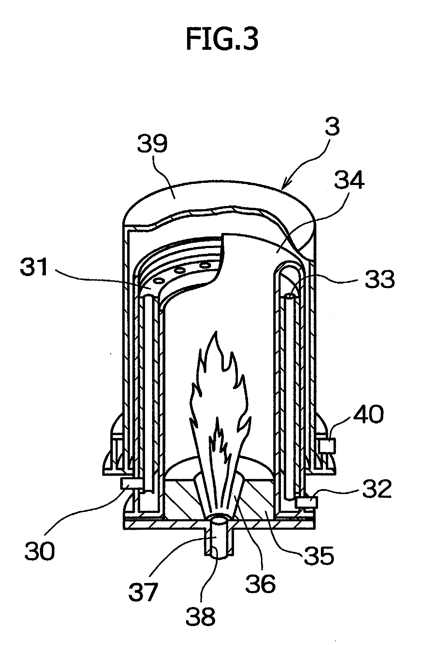

Figure 3 shows one embodiment of the membrane reformer 3. In this membrane reformer 3, a mixed gas of fuel and water vapor is introduced through a material supply port 30. The introduced mixed gas is reformed by a reforming catalyst layer 31, and generates gas containing hydrogen gas. The hydrogen gas in the generated gas permeates a hydrogen permeating membrane element (membrane element) 33 and flows out of a hydrogen outlet 32. Also, gas (CO₂, CO, H₂O, unreacted material) that has not permeated the hydrogen permeating membrane element 33 is discharged from an offgas outlet, and is used as fuel within the system. The reforming catalyst layer 31 and the hydrogen permeating membrane element 33 are contained in an internal cylinder 34.

On the other hand, the membrane reformer 3 has a combustion burner 36 provided in the center of a burner tile 35. The combustion burner 36 burns fuel gas introduced through a fuel gas pipe 37 with air introduced through an air intake pipe 38. Thereby, heat energy necessary for the water vapor reforming reaction is supplied to the reforming catalyst layer 31 to keep the reforming catalyst layer 31 at a predetermined temperature. The internal cylinder 34 is covered by a casing 39, and combustion exhaust gas is discharged from an exhaust gas outlet 40.

In this embodiment, as a reforming catalyst used, any catalyst that has been used conventionally when hydrogen is produced from the above-described material by the water vapor reforming method can be used. In order to accommodate various kinds of material, for example, a nickel-base or ruthenium-base catalyst is suitable for a hydrocarbon material such as city gas, LPG, and gasoline, and a copper/zinc-base or platinum-base catalyst is suitable for an oxygen-containing hydrocarbon material such as methanol and DME. The hydrogen permeating membrane element 33 is formed of a metallic membrane that allows only the produced hydrogen to permeate. Since the hydrogen permeating metallic membrane allows selectively only hydrogen to permeate, the separated hydrogen has a purity as high as 99.999%, and hence it is highly suitable as hydrogen for fuel cell.

In addition, the yielded hydrogen is immediately separated selectively from the product according to the reaction by the hydrogen permeating membrane element 33 to reduce the partial pressure of hydrogen in the product. Therefore, the reaction proceeds toward the hydrogen increasing side, and resultantly the invert ratio at the same reaction temperature increases. In other words, although the temperature in the reaction region must be about 800°C in the methane water vapor reforming method, the invert ratio of the same value can be achieved at a temperature of 500 to 600°C by the use of the hydrogen permeating membrane element 33 in the membrane reformer 3 of this embodiment. Thus, since the chemical reaction can be caused to proceed toward the hydrogen increasing side by causing hydrogen to permeate the hydrogen permeating membrane element 33, the reforming temperature is decreased by 200 to 300°C. Thereby, a quantity of heat for heating the reaction gas is saved, and thermal efficiency is improved significantly. Also, since the reaction temperature is low, an inexpensive material that has low heat resistance can be used for the system, and hence the system cost can be reduced.

The hydrogen permeating metallic membrane has a thickness of 5 to 50 µm and is formed on an inorganic porous layer so that hydrogen is allowed selectively to permeate. The inorganic porous layer under the hydrogen permeating metallic membrane is a carrier for holding the hydrogen permeating metallic membrane, and is formed of porous stainless steel nonwoven fabric, ceramics, glass, or the like with a thickness in the range of 0.1 mm to 1 mm. Further, on the inside, a wire mesh consisting of a single layer or a plurality of layers is preferably arranged as a construction strength member. It is preferable that the hydrogen permeating metallic membrane be a nonporous layer consisting of any of a Pd-containing alloy, a Ni-containing alloy, or a V-containing alloy. As the Pd-containing alloy, Pd-Ag alloys, Pd-Y alloys, Pd-Ag-Au alloys, and the like can be cited. As the V-containing alloy, V-Ni alloys, V-Ni-Co alloys, and the like can be cited. As the Ni-containing alloy, LaNi5 and the like can be cited. Also, a method for manufacturing a nonporous Pd layer has been disclosed, for example, in U.S. Patent No. 3155467.

As described above, the membrane reformer 3 shown in Figure 3 can obtain high purity hydrogen with high efficiency and is superior as a reformer used in the hydrogen supply system in accordance with the present invention. Moreover, the membrane reformer 3 can be made compact because of its high efficiency, and hence can be loaded easily on the hydrogen production vehicle.

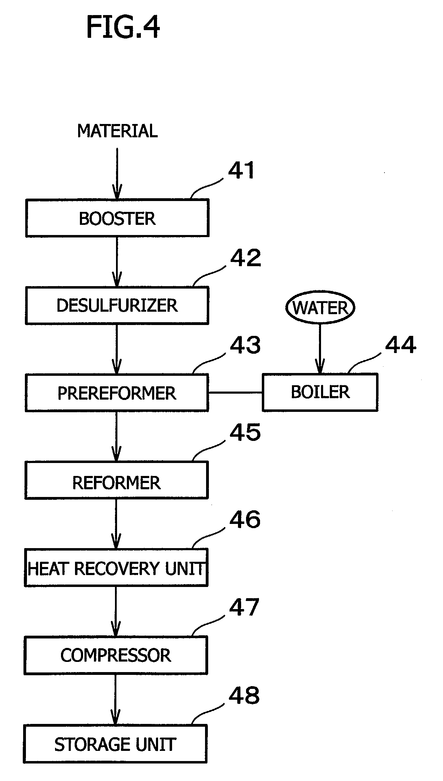

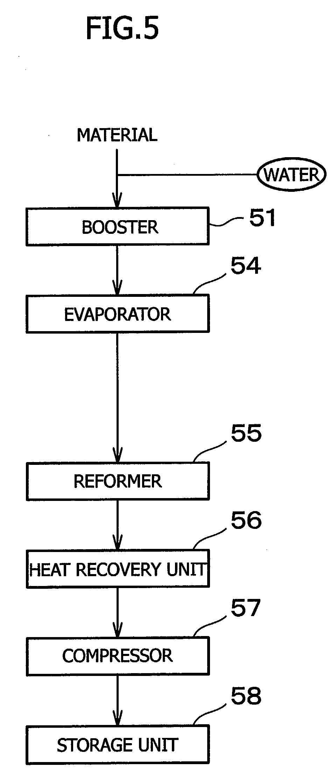

The hydrogen production scheme of the mobile hydrogen production system used in the present invention has been clarified for the hydrogen production vehicle 1 of Fig. 2. However, depending on the assumed fuel, even in the case of multi-fuel type, a variety of embodiments can be adopted. The assumed schemes of the embodiments of mobile hydrogen production systems capable of being used in the present invention will be described with reference to Figures 4 and 5.

Figure 4 shows a scheme corresponding exclusively to hydrocarbon fuel such as city gas, gasoline, and LPG, and oxygen-containing hydrocarbon fuel such as dimethyl ether and ethanol.

This scheme includes a booster 41, a desulfurizer 42, a prereformer 43, a boiler 44, a reformer 45, a heat recovery unit 46, a compressor 47, and a storage unit 48 as main components. In the case of a liquid material, an evaporator is provided between the booster 41 and the desulfurizer 42.

A case where city gas is used as a fuel in this scheme will be described. First, city gas is compressed to about 10 atmospheres by the booster 41. The odorant consisting of S component in city gas is removed by the desulfurizer 42. Subsequently, the city gas is sent to the prereformer 43. At this time, the city gas is supplied with water necessary for the water vapor reforming reaction. The water is supplied to the prereformer 43 as steam via the boiler 44. In the prereformer 43, the city gas and steam react with each other at a temperature of 300 to 500°C, and a small amount of hydrocarbon higher than ethane contained in the city gas is converted into methane or CO, CO₂ and H₂. After prereforming, the yielded gas is supplied to the reformer 45, where CO, CO₂ and H₂ are yielded from methane, which is inherent in city gas, by the water vapor reforming reaction at 500 to 600°C. Among these, only H₂ is separated from the gas via a hydrogen separation membrane provided in a catalyst layer of the reformer 45, and is supplied to the compressor 47 after being cooled by the heat recovery unit 46. In this case, the reformer 45 may be the membrane reformer described with reference to Figure 3 or may be one in which the hydrogen separation membrane is also provided in the reformer body.

An offgas from which H₂ is partially separated by the reformer 45 can be utilized as a heat source for the reformer 45. H₂ that has been compressed by the compressor 47 is once stored in the storage unit 48 (hydrogen tank, hydrogen absorbing alloy, etc.).

When this scheme is used for a liquid fuel such as gasoline, the fuel is pressurized by the booster 41, and then is supplied to the desulfurizer 42 via the evaporator. In this case, in the prereformer 43, almost all of the liquid component such as gasoline is converted into hydrocarbon with a low molecular weight such as methane.

The scheme shown in Figure 5 includes a booster 51, an evaporator 54, a reformer 55, a heat recovery unit 56, a compressor 57, and a storage unit 58 as main components. In this scheme, methanol and dimethyl ether can be assumed as a subject fuel. Such a fuel does not contain S compound, so a desulfurizer is not needed.

When methanol is used as a fuel, first, water and methanol are mixed with each other in advance, and the mixture is supplied to the evaporator 54. As described above, as the reformer 55, a membrane reformer or a reformer consisting of the reformer body and the hydrogen separation membrane is used.

In the reformer 55, reaction proceeds at 200 to 300°C. The construction and function of the heat recovery unit 56, the compressor 57, and the storage unit 58 are the same as the heat recovery unit 46, the compressor 47, and the storage unit 48 explained for Fig. 4.

The hydrogen supply system in accordance with the present invention is not limited to the above-described embodiments, and change, modification, and addition obvious to the person skilled in the art are all embraced in the technical scope of the present invention.

The hydrogen production vehicle 1 shown in Figure 2 may be of a trailer type. In this case, only the hydrogen production unit needs to be placed at the hydrogen supply station for a fixed period of time. This system is suitable for a hydrogen supply station provided with a facility capable of storing a large volume of hydrogen.

As is apparent from the above description, according to the present invention, a hydrogen supply system is provided in which hydrogen can be supplied to a fuel cell powered automobile by utilizing the existing infrastructure.

The disclosure of Japanese Patent Application No.2002-235498 filed on August 13, 2002 including the specification, the claims, the drawings, and the abstract is incorporated herein by reference in its entirety.

## Claims

1. A hydrogen supply system, comprising:
a hydrogen supply station; and
a mobile hydrogen production system;
wherein the hydrogen supply system supplies hydrogen produced by the mobile hydrogen production system to the hydrogen supply station.

2. The hydrogen supply system according to claim 1, wherein the hydrogen supply station is a hydrogen supply station for a fuel cell powered automobile.

3. The hydrogen supply system according to claim 1, wherein the hydrogen supply station is a hydrogen supply station for distributed fuel cell equipment.

4. The hydrogen supply system according to claim 1, wherein the mobile hydrogen production system is provided with a membrane reformer or a reformer including a reformer body and a hydrogen separation unit using a hydrogen separation membrane.

5. The hydrogen supply system according to claim 1, wherein the mobile hydrogen production system is provided with an evaporator.

6. The hydrogen supply system according to claim 1, wherein the mobile hydrogen production system is provided with a desulfurizer.

7. The hydrogen supply system according claim 1, wherein the mobile hydrogen production system is provided with a prereformer for decomposing higher hydrocarbon into lower hydrocarbon.

8. The hydrogen supply system according to claim 7, wherein the lower hydrocarbon is hydrocarbon with a low molecular weight such as methane.

9. The hydrogen supply system according to claim 1, wherein the mobile hydrogen production system is provided with a compressor unit for compressing hydrogen.

10. The hydrogen supply system according to claim 1, wherein the mobile hydrogen production system is configured so that it can produce hydrogen by being supplied with two or more kinds of material.

11. The hydrogen supply system according to claim 1, **characterized in that** the mobile hydrogen production system is provided with a material tank.

12. The hydrogen supply system according to claim 1, wherein the mobile hydrogen production system is provided with a hydrogen tank.

13. The hydrogen supply system according to claim 1, wherein the hydrogen supply station is provided at two or more places, and the mobile hydrogen production system moves to or makes round of the hydrogen supply stations.

14. The hydrogen supply system according to claim 1, wherein the mobile hydrogen production system is provided with a driving mechanism using a fuel cell, so that even while running, hydrogen is produced by receiving a material from a mounted material tank, and the produced hydrogen is utilized for the running of the mobile hydrogen production system itself.

15. The hydrogen supply system according to claim 1, wherein the mobile hydrogen production system is provided with a CO₂ recovery unit.

16. The hydrogen supply system according to claim 1, wherein CO₂ emission is reduced by absorbing CO₂ from the reformer by an absorbent in the mobile hydrogen production system, and the used absorbent is regenerated and also CO₂ is recovered at an absorbent regeneration base.

17. The hydrogen supply system according to claim 16, wherein the regenerated absorbent is utilized to absorb CO₂ in the mobile hydrogen production system.

18. A mobile hydrogen production system, comprising a hydrogen production unit loaded on the system, the unit further comprises:
a membrane reformer;
a hydrogen compressor;
a hydrogen tank;
a boiler;
a CO₂ solvent tank; and
a material tank.

19. The hydrogen supply system according to claim 1, wherein the mobile hydrogen production system is the mobile hydrogen production system as described in claim 18.
